# EUROPÄISCHE PATENTSCHRIFT

(11) **EP 0 812 397 B1**
(45) Veröffentlichungstag und Bekanntmachung des Hinweises auf die Patenterteilung: **29.07.1998**
(21) Anmeldenummer: 96903951.0
(22) Anmeldetag: 31.01.1996
(51) Int. Cl.: F16D 1/09

(54) **REIBSCHLÜSSIGE DREHVERBINDUNG**
FRICTIONAL REVOLVING JOINT
LIAISON ROTATIVE A FRICTION

(30) Priorität: 09.02.1995 DE 19504145
(43) Veröffentlichungstag der Anmeldung: 17.12.1997
(73) Patentinhaber: Schäfer GmbH Technik für Antrieb und Steuerung, 58300 Wetter (DE)
(72) Erfinder: MILLER, Wolfgang, D-58300 Wetter (DE); SCHÄFER, Udo, D-58452 Witten (DE); OPPENLÄNDER, Harry, D-58300 Wetter (DE)
(74) Vertreter: Patentanwälte Wenzel & Kalkoff
(86) Internationale Anmeldenummer: EP9600387
(87) Internationale Veröffentlichungsnummer: WO9624780

(56) Entgegenhaltungen:
- WO-A-95/00767
- DE-A- 3 149 067
- DE-A- 4 320 844

## Beschreibung

Die vorliegende Erfindung bezieht sich auf eine reibschlüssige Drehverbindung mit
- einer auf eine Welle aufsetzbaren und an dieser zu befestigenden Keilringanordnung, die aus zwei Keilringabschnitten mit konischen, im Querschnitt V-förmig angeordneten Außenflächen besteht, wobei die Keilringanordnung in mindestens zwei axiale Segmente unterteilt ist und die Keilringabschnitte der Segmente einteilig gestaltet sind,
- einem die Keilringanordnung umgreifenden Spannring, der aus zwei Spannringelementen mit konischen Innenflächen besteht, die auf den konischen Außenflächen der Keilringabschnitte gleiten,
- einer durch die inneren Stirnflächen der Spannringelemente zwischen diesen gebildeten Druckringkammer,
- einem die radial äußere Seite der Druckringkammer abschließenden ringförmigen Element, wobei zur Abdichtung der Druckringkammer zwischen mindestens einer der Mantelflächen der Spannringelemente und
- dem ringförmigen Element mindestens eine Ringdichtung vorgesehen ist,
- einer Abdichtung der Druckringkammer gegenüber der Welle und der Innenfläche der Keilringanordnung und
- einem hydraulischen Anschluß der Druckringkammer und
- Ringdichtungen zur Abdichtung der Druckringkammer gegenüber der Welle, die in jeder Stellung der Spannringelemente mit diesen in Eingriff stehen.

Solche reibschlüssigen Drehverbindungen sind für Verbindungen einer Hülse auf einer Welle in Form von Kupplungen in verschiedenen Ausführungsformen bekannt.

Aus der DE-PS 31 49 067 ist eine reibschlüssige Drehverbindung der eingangs genannten Art für eine Hülse auf einer Welle bekannt.

Die als Druckraum bezeichnete Druckringkammer wird auf der zur Welle hinweisenden Seite durch die Keilringanordnung und auf der von der Welle nach außen weisenden Seite durch ein als ringförmige Schulter bezeichnetes ringförmiges Element begrenzt. Die Keilringanordnung besteht dabei aus zwei als Druckringe bezeichneten Keilringabschnitten und einer Hülse. Bei der bekannten reibschlüssigen Drehverbindung bilden das ringförmige Element und ein als Außenring bezeichnetes Spannringelement ein einstückiges Teil, wobei dessen das ringförmige Element ausbildendes äußeres Ende das von der Welle wegweisende Ende der Druckringkammer umgreift.

Die Keilringabschnitte sind miteinander verschraubt und bilden in oben angegebener Art und Weise zusammen den Keilring.

Das die Druckringkammer übergreifende äußere Ende des einen Spannringelements ist verschieblich auf der Mantelfläche des anderen Spannringelements gelagert. Zur Abdichtung der Druckringkammer ist zwischen der Mantelfläche des einen Spannringelements und der Innenfläche des die Druckringkammer übergreifenden anderen Spannringelements eine Ringdichtung angeordnet.

Beide Spannringelemente bilden den die Keilringabschnitte umgreifenden Spannring.

Die Druckringkammer ist über einen hydraulischen Anschluß und mindestens einem Kanal unmittelbar mit Hydraulikflüssigkeit beaufschlagbar.

Zur Abdichtung der Druckringkammer gegenüber einer Hülse bzw. der Welle ist eine Ringdichtung an der Verbindungsstelle der beiden Keilringabschnitte vorgesehen.

Die bekannte Kupplung arbeitet wie folgt:
Über den hydraulischen Anschluß und den mit diesem Anschluß fluidmäßig verbundenen Kanal wird die Druckringkammer mit Hydraulikflüssigkeit beaufschlagt. Der Hydraulikdruck bewirkt, daß die beiden Spannringelemente sich gleichzeitig gegen die ansteigenden konischen Außenflächen der Keilringabschnitte bewegen. Dies hat zur Folge, daß die Keilringabschnitte gegen die Hülse und die Hülse wiederum gegen die Welle gepreßt wird. Eine reibschlüssige Verbindung zwischen der Welle und der Hülse ist somit hergestellt. Eine mechanische Sicherung der verspannten Lage ist ebenfalls vorgesehen.

Aufgrund der Anordnung der Ringdichtungen ist die Druckringkammer nicht hermetisch abgedichtet. Es gelangt Hydraulikflüssigkeit zwischen die konischen Außenflächen der Keilringabschnitte und die konischen Innenflächen der Spannringelemente. Dies hat zur Folge, daß bei hohen Betriebsdrücken größere Mengen Hydraulikflüssigkeit entlang der konischen Außenflächen der Keilringabschnitte wandern und so nach außen dringen können.

Nachteilig hierbei ist, daß der für das Spannen der Keilringabschnitte notwendige Druck in der Druckringkammer über einen bestimmten Betrag hinaus nicht vergrößert werden kann, da bei besonders hohen Betriebsdrücken Hydraulikflüssigkeit verstärkt nach außen dringt und so eine Druckbegrenzung hervorruft.

Die bekannten reibschlüssigen Drehverbindungen sind zudem aufwendig in der Wartung, da zum einen die Hydraulikflüssigkeit im Drucksystem ständig überwacht und gegebenenfalls nachgefüllt werden muß, zum anderen muß darauf geachtet werden, daß die Flächen zwischen der Innenseite der Hülse bzw. zwischen den Innenseiten der Keilringabschnitte und der Außenseite der Welle frei von Hydraulikflüssigkeiten bleiben, damit ein Reibschluß zwischen der Welle und der Hülse bzw. der Innenseite der Keilringabschnitte während des Betriebs gewährleistet bleibt.

Es besteht daher die Aufgabe, eine reibschlüssige Drehverbindung der eingangs genannten Art so weiterzubilden, daß unter Vermeidung der genannten Nachteile des Standes der Technik für jeden Anwendungsfall ein zuverlässiges Spannen der Drehverbindung auf der Welle auch mit hohen Betriebsdrücken in der Druckringkammer möglich ist. Zudem soll vermieden werden, daß Hydraulikflüssigkeit außerhalb der reibschlüssigen Drehverbindung und insbesondere in den Raum zwischen der Welle und der Innenfläche der Keilringanordnung gelangt.

Die Aufgabe wird erfindungsgemäß dadurch gelöst, daß
- die zwischen den konischen Außenflächen der Keilringabschnitte und den konischen Innenflächen der Spannringelemente vorgesehenen Ringdichtungen unmittelbar neben der Druckringkammer angeordnet sind und
- ein Zwischenringelement vorgesehen ist, das zwischen oder auf den Keilringabschnitten so angeordnet und derart gestaltet ist, daß dieses mit den Ringdichtungen in jeder Stellung der Spannringelemente zusammenwirkt und so die Druckringkammer in jeder Stellung der Spannringelemente zur Welle hin begrenzt und abgedichtet ist.

Die reibschlüssige Drehverbindung hat daher den entscheidenden Vorteil, daß die Druckringkammer aufgrund der Anordnung der Ringdichtungen vollständig gegenüber ihrer Umgebung abgedichtet ist und so mögliche Leckageverluste vermieden werden.

Ein weiterer Vorteil der erfindungsgemäßen reibschlüssigen Drehverbindung ist darin zu sehen, daß der in der Druckringkammer wählbare Betriebsdruck gegenüber dem maximalen Druck in der Druckringkammer der Drehverbindung des Standes der Technik wesentlich höher gewählt werden kann. Aus dem genannten Grund ist eine sichere Spannverbindung bis mindestens zu einem auf die Welle wirkenden Drehmoment von 1.500.000 Nm möglich.

Gemäß einer vorteilhaften Weiterbildung der Erfindung ist zwischen den Keilringabschnitten und der Welle eine Hülse vorgesehen, die mit den Keilringabschnitten die Keilringanordnung bildet. Diese Hülse ist vorzugsweise in ihrem Umfang mehrfach axial unterteilt. Vorteilhafterweise ist die Hülse dreiteilig ausgebildet. Des weiteren weisen die einzelnen Elemente der Hülse im entspannten Zustand Zwischenräume in Form von Schlitzen auf. Dies bewirkt eine optimale Übertragung der durch die Verschiebung der Spannringelemente bewirkte Spannkraft auf die Welle.

Ferner ist ein Zwischenringelement vorgesehen, das zwischen den Keilringabschnitten angeordnet und derart gestaltet ist, daß die Druckringkammer in jeder möglichen Stellung der Spannringelemente zur Welle hin begrenzt und abgedichtet ist.

Eine Weiterbildung der erfindungsgemäßen Drehverbindung erlaubt eine gegenüber dem bekannten Stand der Technik wesentlich einfachere Montage, da die für die Abdichtung der Druckringkammer gegenüber den konischen Außenflächen der Keilringabschnitte notwendigen Ringdichtungen vor dem Aufsetzen des Zwischenringelements auf ddie Keilringabschnitte bereits in im Zwischenringelement vorgesehene Sitze eingesetzt werden.

Dadurch entfällt auch eine weitere Bearbeitung der konischen Außenflächen der Keilringabschnitte oder der konischen Innenflächen der Spannringelemente, die an sich bei Aufnahme der Ringdichtungen in den konischen Flächen notwendig wäre.

Ein weiterer und kostenbedeutender Vorteil ist darin zu sehen, daß durch diese Anordnung der Ringdichtungen auf dem Zwischenringelement mit einem einzigen Bauteil sowohl eine Abdichtung der Druckringkammer gegenüber den konischen Außenflächen der Keilringabschnitte als auch eine Abdichtung gegenüber der Welle und den Innenflächen der Keilringabschnitte bewirkt wird.

Erfindungsgemäß besteht die Keilringanordnung ausschließlich aus zwei Keilringabschnitten, die konische, im Querschnitt V-förmig angeordnete Außenflächen aufweisen. Die beiden Keilringabschnitte sind einteilig gestaltet, wobei diese in mindestens zwei, vorzugsweise drei axiale Segmente unterteilt sind.

Vorteilhafterweise bildet ein die Druckringkammer nach außen hin begrenzendes ringförmiges Element mit einem Spannringelement ein einstückiges Teil. Aufgrund dieser Anordnung ist ausschließlich eine einzige Ringdichtung notwendig, um die Druckringkammer auf der von der Welle wegweisenden Seite nach außen hin abzudichten.

Mindestens eine in einem der Spannringelemente vorgesehene Halteschraube hält die verspannte Lage der Keilringabschnitte aufrecht, so daß es für die dauerhafte Erzielung einer reibschlüssigen Verbindung nicht notwendig ist, die Druckringkammer dauerhaft mit Hydraulikflüssigkeit unter Betriebsdruck zu beaufschlagen.

Vorzugsweise sind sechs auf einer von der Druckringkammer wegweisenden Stirnseite der Spannringelemente jeweils im Winkelabstand von 60° zueinander angeordnete Halteschrauben vorgesehen.

Die hydraulische Druckbeaufschlagung nach dem Prinzip eines einfach wirkenden hydraulischen Zylinders ist deshalb möglich, weil die Neigung der konischen Außenflächen der Keilringabschnitte bevorzugt so gewählt wird, daß der Neigungswinkel des jeweiligen konischen Keilringeiements ein wenig größer ist als der Reibungswinkel von zwei aufeinandergleitenden gut bearbeiteten und geschmierten Metallflächen.

Weitere vorteilhafte Ausgestaltungen der Erfindung gehen aus den Unteransprüchen und der Beschreibung hervor.

Nachfolgend wird die Erfindung anhand eines Ausführungsbeispiels, das in den Zeichnungen dargestellt ist, näher erläutert. Die Zeichnungen zeigen:
- Fig. 1: einen Querschnitt durch eine reibschlüssige Drehverbindung, montiert auf einer Welle, wobei die Druckringkammer drucklos ist und die Spannringelemente sich in der entspannten Lage befinden,
- Fig. 2: einen Querschnitt der reibschlüssigen Drehverbindung gemäß Fig. 1, jedoch gegenüber Fig. 1 mit einer druckbeaufschlagten Druckringkammer und Spannringelementen in gespannter Lage, wobei mittels einer Halteschraube die Spannringelemente zusätzlich in gespannter Lage gehalten werden.

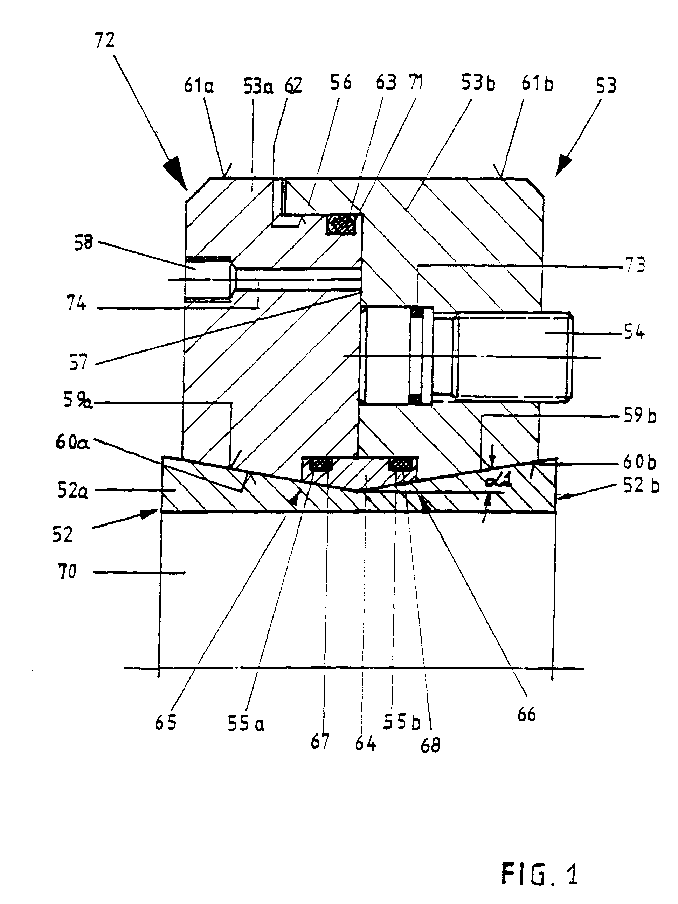

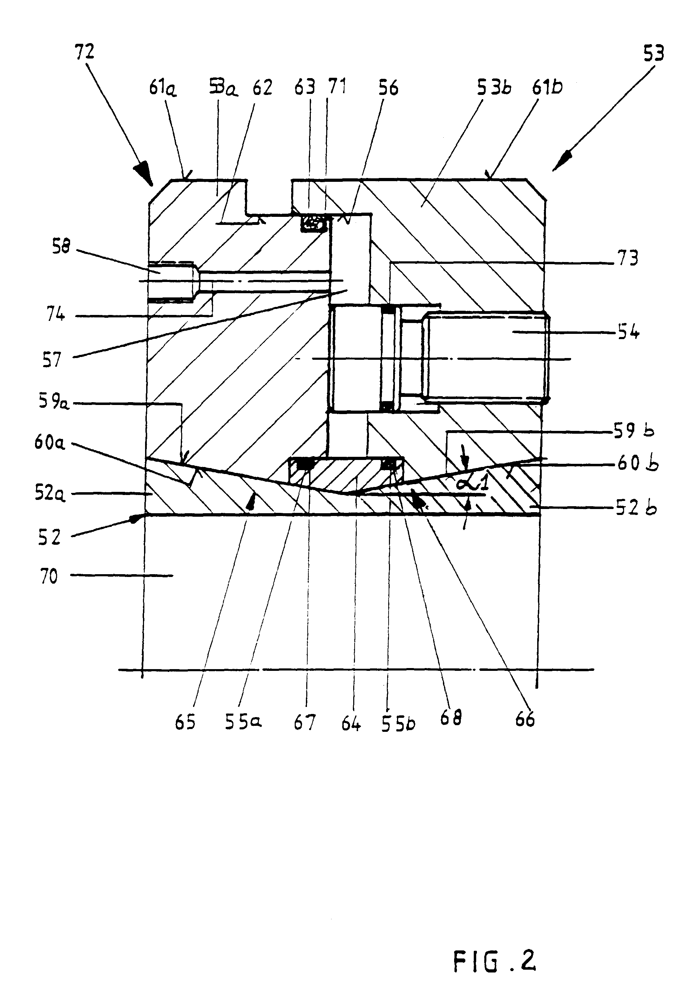

In Fig. 1 ist ein Querschnitt einer reibschlüssigen Drehverbindung 72 gezeigt. Diese besteht im wesentlichen aus zwei Elementen, nämlich aus einer auf eine Welle 70 aufsetzbaren, im Umfang mehrmals axial unterteilten Keilringanordnung 52 und einem die Keilringanordnung 52 umgreifenden Spannring 53. Die Keilringanordnung 52 umfaßt bei diesem Ausführungsbeispiel (Fig. 1, 2) ausschließlich die die Welle 70 umgreifenden Keilringabschnitte 52a, 52b. Sie weisen konische, im Querschnitt V-förmig angeordnete Außenflächen 59a, 59b auf und sind einteilig gestaltet. Aufgrund der Einteiligkeit der Keilringabschnitte 52a, 52b ist eine Verschiebung der Keilringanordnung 52 in Richtung der Längserstreckung der Welle 70 nur zusammen mit dem Spannring 53 möglich.

Der die Keilringanordnung 52 umgreifende Spannring 53 besteht wiederum aus zwei, hinsichtlich ihrer Grundform vorzugsweise identischen Spannringelementen 53a, 53b. Die Spannringelemente 53a, 53b weisen konische Innenflächen 60a, 60b auf, die auf den konischen Außenflächen 59a, 59b der Keilringabschnitte 52a, 52b gleiten.

Aufgrund der Anordnung der Spannringelemente 53a, 53b bildet sich zwischen den inneren Stirnflächen der jeweiligen Spannringelemente 53a, 53b eine Druckringkammer 57, die zur Welle 70 hin durch die Keilringanordnung 52 und auf der von der Welle 70 wegweisenden Seite durch ein ringförmiges Element 56 räumlich begrenzt ist.

Die Druckringkammer 57 steht über mindestens eine in einem Spannringelement 53a, 53b oder in dem ringförmigen Element 56 vorgesehene Druckleitung 74 mit einem hydraulischen Anschluß 58 fluidmäßig in Verbindung.

Das ringförmige Element 56 ist vorzugsweise als äußerer Ring ausgebildet und umschließt mindestens einen Teil der Mantelfläche 61a, 61b des Spannrings 53 mit seiner Innenfläche 62.

Bei dem in den Fig. 1 und 2 dargestellten Ausführungsform ist das ringförmige Element 56 einstückig mit einem der Spannringelemente 53a, 53b verbunden und so gestaltet, daß dieses das andere Spannringelement übergreift und so die Druckringkammer 57 auf der von der Welle 70 wegweisenden Seite begrenzt. Die für die Abdichtung der Druckringkammer 57 notwendige Ringdichtung 63 ist vorzugsweise unmittelbar neben der Druckringkammer 57 in einer Ausnehmung 71 in einem der Spannringelemente 53a, 53b angeordnet.

Ferner ist ein Zwischenringelement 64 vorgesehen, das auf den Außenflächen der Keilringabschnitte 52a, 52b im Grund der V-förmigen Keilringanordnung 52 so angeordnet und derart gestaltet ist, daß die Druckringkammer 57 in jeder Stellung der Spannringelemente 53a, 53b zur Welle 70 und zu den konischen Außenflächen 59a, 59b der Keilringabschnitte 52a, 52b hin begrenzt und abgedichtet ist.

Dies wird dadurch bewirkt, daß das Zwischenringelement 64 an seinen beiden äußeren Enden 65, 66 Ausnehmungen 67, 68 zur Aufnahme von Ringdichtungen 55a, 55b aufweist. Die Ausnehmungen 67, 68 für die Ringdichtungen 55a, 55b sind dabei so angeordnet und derart gestaltet, daß die Ringdichtungen 55a, 55b in jeder Stellung der Spannringelemente 53a, 53b mit den Innenflächen 60a, 60b der Spannringelemente 53a, 53b in Eingriff stehen.

Ist die gewünschte Spannstellung erreicht (Fig. 2), ist für die Sicherung und Arretierung der Spannlage mindestens eine von einem Spannringelement 53b gehaltene Halteschraube 54 vorgesehen.

Notwendigerweise ist die Anzahl von Halteschrauben 54 abhängig von der Spannkraft, die erforderlich ist, um die Spannlage zu halten.

Jede Halteschraube 54 weist eine Ringdichtung 73 auf, die zur Abdichtung der Druckringkammer 57 gegenüber dem Gewinde der im Spannringelement 53b gehaltenen Halteschraube 54 vorgesehen ist.

Nach Sichern der Spannlage durch die Halteschraube(n) 54 kann die Druckringkammer 57 drucklos gemacht werden, ohne daß sich die reibschlüssige Drehverbindung von der Welle 70 löst.

Jede der oben beschriebenen Ausführungsbeispiele ermöglicht eine hermetische Abdichtung der Druckringkammer 57 und somit auch ein sicheres und zuverlässiges Spannen bei sehr hohen Spannkräften.

## Patentansprüche

1. Reibschlüssige Drehverbindung mit
- einer auf eine Welle (70) aufsetzbaren und an dieser zu befestigenden Keilringanordnung (52), die aus zwei Keilringabschnitten (52a, 52b) mit konischen, im Querschnitt V-förmig angeordneten Außenflächen (59a, 59b) besteht, wobei die Keilringanordnung (52) in mindestens zwei axiale Segmente unterteilt ist und die Keilringabschnitte (52a, 52b) der Segmente einteilig gestaltet sind,
- einem die Keilringanordnung (52) umgreifenden Spannring (53), der aus zwei Spannringelementen (53a, 53b) mit konischen Innenflächen (60a, 60b) besteht, die auf den konischen Außenflächen (59a, 59b) der Keilringabschnitte (52a, 52b) gleiten,
- einer durch die inneren Stirnflächen der Spannringelemente zwischen diesen gebildeten Druckringkammer (57),
- einem die radial äußere Seite der Druckringkammer (57) abschließenden ringförmigen Element (56), wobei zur Abdichtung der Druckringkammer (57) zwischen mindestens einer der Mantelflächen der Spannringelemente (53a, 53b) und dem ringförmigen Element (56) mindestens eine Ringdichtung (63) vorgesehen ist,
- einer Abdichtung der Druckringkammer (57) gegenüber der Welle (70) und der Innenfläche der Keilringanordnung (52) und
- einem hydraulischen Anschluß (58) der Druckringkammer (57) und
- Ringdichtungen (55a, 55b) zur Abdichtung der Druckringkammer (57) gegenüber der Welle (70), die in jeder Stellung der Spannringelemente (53a, 53b) mit diesen in Eingriff stehen,
**dadurch gekennzeichnet**, daß
- die zwischen den konischen Außenflächen (59a, 59b) der Keilringabschnitte (52a, 52b) und den konischen Innenflächen (60a, 60b) der Spannringelemente (53a, 53b) vorgesehenen Ringdichtungen (55a, 55b) unmittelbar neben der Druckringkammer (57) angeordnet sind und
- ein Zwischenringelement (64) vorgesehen ist, das zwischen oder auf den Keilringabschnitten (52a, 52b) so angeordnet und derart gestaltet ist, daß dieses mit den Ringdichtungen (55a, 55b) in jeder Stellung der Spannringelemente (53a, 53b) zusammenwirkt und so die Druckringkammer (57) in jeder Stellung der Spannringelemente (53a, 53b) zur Welle (70) in begrenzt und abgedichtet ist.

2. Drehverbindung nach Anspruch 1, dadurch **gekennzeichnet**, daß die zwischen mindestens einer der Mantelflächen (11a, 11b; 61a, 61b) der Spannringelemente (3a, 3b; 53a, 53b) und dem ringförmigen Element (6, 56) vorgesehene Ringdichtung (13a, 13b; 63) unmittelbar neben der Druckringkammer (7; 57) vorgesehen ist.

3. Drehverbindung nach Anspruch 1, dadurch **gekennzeichnet**, daß das Zwischenringelement (64) im Bereich seiner beiden äußeren Enden (65, 66) Ausnehmungen 67, 68 zur Aufnahme der Ringdichtungen (55a, 55b aufweist.

4. Drehverbindung nach einem der vorhergehenden Ansprüche, dadurch **gekennzeichnet**, daß das den Spannring (53) umgreifende ringförmige Element (56) als ein äußerer Ring ausgebildet ist.

5. Drehverbindung nach einem oder mehreren der vorhergehenden Ansprüche, dadurch **gekennzeichnet,** daß die Ringdichtung (63) in einer Ausnehmung (71) in einem der Spannringelemente (53a, 53b) angeordnet ist.

6. Drehverbindung nach einem oder mehreren der vorhergehenden Ansprüche, dadurch **gekennzeichnet**, daß die Spannringelemente (53a, 53b) mittels mindestens einer in einem Spannringelement (53b) gehaltenen Halteschraube (54) in der Spannlage sicherbar sind.

7. Drehverbindung nach Anspruch 6, dadurch **gekennzeichnet**, daß eine die Halteschraube (54) umgreifende Ringdichtung (73) zur Abdichtung des Druckringkammer (57) gegenüber dem Gewinde der im Spannringelement (53b) gehaltenen Halteschraube (54) vorgesehen ist.

8. Drehverbindung nach einem der vorhergehenden Ansprüche, dadurch **gekennzeichnet**, daß die Neigung der konischen Außenflächen (59a, 59b) der Keilringabschnitte (52a, 52b) so gewählt ist, daß der mit der Mittelachse der Welle (70) eingeschlossene Winkel (α1) größer als 7° ist.

9. Drehverbindung nach einem der vorhergehenden Ansprüche, dadurch **gekennzeichnet**, daß die Ringdichtungen (55a, 55b; 63) O-Ringe sind.

## Claims

1. Frictional revolving joint having
- a tapered ring arrangement (52) mountable on a shaft (70) and fixed thereto comprising two tapered ring sections (52a, 52b) with conical outer surfaces (59a, 59b) cross-sectionally arranged in a V-shape, the tapered ring arrangement (52) being subdivided into at least two axial segments and the tapered ring sections (52a, 52b) of the segments being in one piece,
- a clamping ring (53) surrounding the tapered ring arrangement (52) and comprising two clamping ring elements (53a, 53b) with conical inner surfaces (60a, 60b), which slide on conical outer surfaces (59a, 59b) of the tapered ring sections (52a, 52b),
- a ring-shaped pressure chamber (57) formed by and between the inner front surfaces of the clamping ring elements,
- a ring-shaped element (56) sealing the radial outside of the ring-shaped pressure chamber (57), in which for sealing the ring-shaped pressure chamber (57) at least one sealing ring (63) is provided between at least one of the circumferential surfaces of the clamping ring elements (53a, 53b) and the ring-shaped element (56),
- a seal of the ring-shaped pressure chamber (57) relative to the shaft (70) and the inner surface of the tapered ring arrangement (52) and
- a hydraulic connection (58) of the ring-shaped pressure chamber (57) and
- sealing rings (55a, 55b) for sealing the ring-shaped pressure chamber (57) with respect to the shaft (70), which in each position of the clamping ring elements (53a, 53b) is in engagement therewith,
characterized in that
- the sealing rings (55a, 55b) provided between the conical outer surfaces (59a, 59b) of the tapered ring sections (52a, 52b) and the conical inner surfaces (60a, 60b) of the clamping ring elements (53a, 53b) are provided directly alongside the ring-shaped pressure chamber (57) and
- an intermediate ring element (64) is provided, which is so positioned and designed between or on the tapered ring sections (52a, 52b) that cooperation occurs between the same and the sealing rings (55a, 55b) in each position of the clamping ring elements (53a, 53b) and in this way the ring-shaped pressure chamber (57) is in each position of the clamping ring elements (53a, 53b) bounded and sealed relative to the shaft (70).

2. Revolving joint according to claim 1, characterized in that the sealing ring (13a, 13b; 63) provided between at least one of the circumferential surfaces (11a, 11b; 61a, 61b) of the clamping ring elements (3a, 3b; 53a, 53b) and the ring-shaped element (6, 56) is provided directly alongside the ring-shaped pressure chamber (7, 57).

3. Revolving joint according to claim 1, characterized in that the intermediate ring element (64) has in the vicinity of its two outer ends (65, 66) recesses (67, 68) for receiving the sealing rings (55a, 55b).

4. Revolving joint according to one of the preceding claims, characterized in that the ring-shaped element (56) surrounding the clamping ring (53) is constructed as an outer ring.

5. Revolving joint according to one or more of the preceding claims, characterized in that the sealing ring (63) is located in a recess (71) in one of the clamping ring elements (53a, 53b).

6. Revolving joint according to one or more of the preceding claims, characterized in that the clamping ring elements (53a, 53b) can be secured in the clamped position by means of at least one retaining screw (54) retained in a clamping ring element (53b).

7. Revolving joint according to claim 6, characterized in that a sealing ring (73) surrounding the retaining screw (54) is provided for sealing the ring-shaped pressure chamber (57) relative to the thread of the retaining screw (54) held in the clamping ring element (53b).

8. Revolving joint according to one of the preceding claims, characterized in that the inclination of the conical outer surfaces (59a, 59b) of the tapered ring sections (52a, 52b) is so chosen that the angle (α1) formed with the centre axis of the shaft (70) is greater than 7°.

9. Revolving joint according to one of the preceding claims, characterized in that the sealing rings (55a, 55b; 63) are O-rings.

## Revendications

1. Liaison rotative à friction avec
- un arrangement à bague conique (52) pouvant être rapporté sur un arbre (70) et devant être fixé sur celui-ci, arrangement qui est constitué par deux tronçons de bague conique (52a, 52b) avec des faces extérieures coniques (59a, 59b) , placées en section en forme de V, l'arrangement à bague conique (52) étant divisé en au moins deux segments axiaux et les tronçons de bague conique (52a, 52b) des segments étant configurés en une partie,
- un anneau tendeur (53) enveloppant l'arrangement à bague conique (52), anneau tendeur qui est constitué par deux éléments d'anneau tendeur (53a, 53b) avec des surfaces intérieures coniques (60a, 60b) qui glissent sur les faces extérieures coniques (59a, 59b) des tronçons d'anneau tendeur (52a, 52b),
- une chambre toroïdale de pression (57) formée par les faces frontales intérieures des éléments d'anneau tendeur entre ceux-ci,
- un élément en forme d'anneau (56) qui ferme le côté radialement extérieur de la chambre toroïdale de pression (57), au moins une étanchéité annulaire (63) étant prévue pour étancher la chambre toroïdale de pression (57) entre au moins l'une des surfaces de l'enveloppe des éléments de l'anneau tendeur (53a, 53b) et l'élément en forme d'anneau (56),
- une étanchéité de la chambre toroïdale de pression (57) par rapport à l'arbre (70) et à la face intérieure de l'arrangement à bague conique (52) et
- un raccord hydraulique (58) de la chambre toroïdale de pression (57) et
- des étanchéités annulaires (55a, 55b) pour étancher la chambre toroïdale de pression (57) par rapport à l'arbre (70) qui sont en prise dans chaque position des éléments de l'anneau tendeur (53a, 53b)avec ceux-ci,
caractérisée en ce que
- les étanchéités annulaires (55a, 55b) prévues entre les faces extérieures coniques (59a, 59b) des tronçons de bague conique (52a, 52b) et les faces intérieures coniques (60a, 60b) des éléments de l'anneau tendeur (53a, 53b) sont placées directement à côté de la chambre de pression toroïdale (57) et
- qu'un élément d'anneau intermédiaire (64) est prévu qui est placé entre ou sur les tronçons de bague conique (52a, 52b) de telle manière et qui est configuré de telle manière que celui-ci coopère avec les étanchéités annulaires (55a, 55b) dans chaque position des éléments de l'anneau tendeur (53a, 53b) et qui délimite ainsi et étanche la chambre de pression toroïdale (57) dans chaque position des éléments de l'anneau tendeur (53a, 53b) vers l'arbre (70).

2. Liaison rotative selon la revendication 1, caractérisée en ce que l'étanchéité annulaire (13a, 13b ; 63) prévue entre au moins l'une des surfaces de l'enveloppe (11a, llb ; 61a, 61b) des éléments de l'anneau tendeur (3a, 3b ; 53a, 53b) et l'élément annulaire (6, 56) est prévue directement à côté de la chambre toroïdale de pression (7 ; 57).

3. Liaison rotative selon la revendication 1, caractérisée en ce que l'élément d'anneau intermédiaire (64) présente, dans la zone de ses deux extrémités extérieures (65, 66), des évidements (67, 68) pour loger les étanchéités annulaires (55a, 55b).

4. Liaison rotative selon l'une des revendications précédentes, caractérisée en ce que l'élément annulaire (56) qui enveloppe l'anneau tendeur (53) est configuré comme un anneau extérieur.

5. Liaison rotative selon l'une ou plusieurs des revendications précédentes, caractérisée en ce que l'étanchéité annulaire (63) est placée dans un évidement (71) dans l'un des éléments de l'anneau tendeur (53a, 53b).

6. Liaison rotative selon l'une ou plusieurs des revendications précédentes, caractérisée en ce que les éléments de l'anneau tendeur (53a, 53b) peuvent être bloqués dans la position tendue au moyen d'au moins une vis de retenue (54) maintenue dans un élément de l'anneau tendeur (53b).

7. Liaison rotative selon la revendication 6, caractérisée en ce qu'une étanchéité annulaire (73) qui enveloppe la vis de retenue (54) est prévue pour étancher la chambre toroïdale de pression (57) par rapport au filet de la vis de retenue (54) maintenue dans l'élément de l'anneau tendeur (53b).

8. Liaison rotative selon l'une des revendications précédentes, caractérisée en ce que l'inclinaison des faces extérieures coniques (59a, 59b) des tronçons de bague conique (52a, 52b) est sélectionnée de telle manière que l'angle inclus (α1) avec l'axe médian de l'arbre (70) est plus grand que 7°.

9. Liaison rotative selon l'une des revendications précédentes, caractérisée en ce que les étanchéités annulaires (55a, 55b ; 63) sont des anneaux toriques.
